# EUROPÄISCHE PATENTSCHRIFT

(11) **EP 3 057 835 B1**
(45) Veröffentlichungstag und Bekanntmachung des Hinweises auf die Patenterteilung: **10.04.2019**
(21) Anmeldenummer: 14772128.6
(22) Anmeldetag: 23.09.2014
(51) Int. Cl.: B60R 13/02

(54) **INNENVERKLEIDUNGSELEMENT FÜR EIN KRAFTFAHRZEUG**
INTERIOR TRIM ELEMENT FOR A MOTOR VEHICLE
ÉLÉMENT DE GARNITURE INTÉRIEURE POUR UN VÉHICULE AUTOMOBILE

(30) Priorität: 14.10.2013 DE 102013111309
(43) Veröffentlichungstag der Anmeldung: 24.08.2016
(73) Patentinhaber: EuWe Eugen Wexler Holding GmbH & Co. KG, 91207 Lauf a. d. Pegnitz (DE)
(72) Erfinder: LIEBAU, Burkhard, 90453 Nürnberg (DE)
(74) Vertreter: Hafner & Kohl
(86) Internationale Anmeldenummer: PCT/EP2014/070206
(87) Internationale Veröffentlichungsnummer: WO 2015/055388

(56) Entgegenhaltungen:
- EP-A1- 1 743 805
- EP-A2- 0 215 189
- DE-A1- 3 822 398
- US-A- 4 961 605
- US-A- 5 409 746
- US-A1- 2007 085 361
- US-A1- 2011 127 797
- US-B1- 6 436 212

## Beschreibung

Die Erfindung betrifft ein Innenverkleidungselement für ein Kraftfahrzeug, umfassend einen ein Innenvolumen begrenzenden, insbesondere wannenförmigen, Grundkörper und wenigstens ein Bügelelement, wobei das wenigstens eine Bügelelement über wenigstens ein Filmscharnier schwenkbar an dem Grundkörper angelenkt ist.

Entsprechende Innenverkleidungselemente oder Innenverkleidungsteile für Kraftfahrzeuge sind an und für sich bekannt. Die Innenverkleidungselemente umfassen einen ein Innenvolumen begrenzenden, typischerweise trog- oder wannenförmigen Grundkörper und ein über ein Filmscharnier typischerweise im Bereich eines freien Endes eines Randabschnitts des Grundkörpers schwenkbar angelenktes Bügelelement.

Entsprechende Innenverkleidungselemente sind üblicherweise aus thermoplastischen Kunststoffmaterialien gebildet. Durch Schwenkbewegungen des Bügelelements relativ zu dem Grundkörper kann es im Bereich des Filmscharniers zu der Ausbildung so genannter "Weißbrüche" kommen. Unter einem "Weißbruch" ist ein auf mechanische Beanspruchung zurückzuführendes Phänomen bei thermoplastischen Kunststoffmaterialien bekannt, wobei mechanisch induzierte Beanspruchungen, insbesondere Spannungen, des Kunststoffmaterials zu einer Änderung der optischen Eigenschaften, insbesondere des Brechungsverhaltens, führen, was an einer Trübung und/oder Verfärbung in dem mechanisch beanspruchten Bereich des Kunststoffmaterials erkennbar ist.

Die die optische Anmutung entsprechender Innenverkleidungselemente regelmäßig beeinträchtigende Bildung entsprechender "Weißbrüche" lässt sich materialbedingt kaum umgehen, so dass ein Bedarf besteht, entsprechende "Weißbrüche" anderweitig zu kaschieren.

DE 38 22 398 A1 offenbart ein Kunststoffbauelement zur Anbringung an einem Träger, insbesondere einer Karosserie oder einem Gehäuseteil, mittels einer Klebstoffschicht. Das Kunststoffbaulement hat einen Grundkörper und wenigstens ein Bügelelement, wobei das wenigstens eine Bügelelement über wenigstens ein Filmscharnier schwenkbar an dem Grundkörper angelenkt ist, wobei das Filmscharnier grundkörperseitig an einem an einem das Innenvolumen abschnittweise begrenzenden Randabschnitt des Grundkörpers gebildeten Ansatz ausgebildet ist, wobei der Ansatz versetzt zu dem freien Ende des Randabschnitts angeordnet ist, und wobei zwischen dem freien Ende des Randabschnitts und dem Ansatz eine muldenartige Vertiefung gebildet ist.

US 5 409 746 A offenbart ein im Bereich eines Hecks außenseitig an einer Fahrzeugkarossiere zu befestigendes Bauteil. Das Bauteil umfasst ein Klappenelement zur Abdeckung von der Befestigung des Bauteils an der Fahrzeugkarosserie dienenden Befestigungselementen.

Der Erfindung liegt die Aufgabe zugrunde, ein verbessertes Innenverkleidungselement für ein Kraftfahrzeug anzugeben.

Die Aufgabe wird erfindungsgemäß durch ein Innenverkleidungselement gemäß Anspruch 1 gelöst.

Das erfindungsgemäße Innenverkleidungselement, welches selbstverständlich auch als Innenverkleidungsteil bezeichnet werden kann, zeichnet sich sonach durch eine besondere konstruktive Anordnung des den diesem zugehörigen Grundkörper mit dem oder einem diesem zugehörigen Bügelelement verbindenden Filmscharniers aus. Das Filmscharnier ist grundkörperseitig, d. h. mit seinem an dem Grundkörper angebundenen bzw. angelenkten Bereich, erfindungsgemäß an einem Ansatz angebunden bzw. ausgebildet, welcher Ansatz wiederum an einem das grundkörperseitige Innenvolumen abschnittsweise begrenzenden Randabschnitt des Grundkörpers angeordnet bzw. angebunden ist. Der Ansatz ist sonach um ein im Hinblick auf eine konkrete konstruktive Umsetzung des erfindungsgemäßen Innenverkleidungselements festzulegendes Maß versetzt zu dem freien Ende des Randabschnitts angeordnet. Der Ansatz ist also nicht unmittelbar im Bereich des freien Endes des Randabschnitts angeordnet. Der Ansatz bildet sonach typischerweise keinen Teil des freien Endes des Randabschnitts. Durch die erfindungsgemäß vorgesehene versetzte Anordnung des Ansatzes ergibt es sich typischerweise, dass der Ansatz zumindest abschnittsweise, insbesondere vollständig, in das Innenvolumen des Grundkörpers ragt.

Demzufolge ist auch das Filmscharnier grundkörperseitig nicht unmittelbar an dem freien Ende eines entsprechenden Randabschnitts, sondern an dem für die grundkörperseitige Anbindung des Filmscharniers hierfür eigens vorgesehenen Ansatz ausgebildet bzw. angebunden, welcher Ansatz, wie erwähnt, grundkörperseitig um ein gewisses Maß versetzt zu dem freien Ende des Randabschnitts, d. h. insbesondere räumlich getrennt von dem freien Ende des Randabschnitts, angeordnet ist.

Das erfindungsgemäße Prinzip basiert sonach auf einer speziell gewählten konstruktiven Anordnung bzw. Anbindung des Filmscharniers an den Grundkörper respektive einem diesem zugehörigen Randabschnitt, welche die bei entsprechenden Filmscharnieren typischerweise unumgänglichen "Weißbrüche" kaschiert. Die über den Ansatz realisierte versetzte Anordnung bzw. Anbindung des Filmscharniers an den Grundkörper ist sonach derart gewählt, dass entsprechende Weißbrüche, insbesondere im in mit einem Kraftfahrzeug bzw. einer Fahrzeugkarosserie verbauten Zustand des Innenverkleidungselements, für einen Nutzer nicht sichtbar sind. Es ist demnach bevorzugt, dass der Ansatz derart versetzt zu dem freien Ende des Randabschnitts angeordnet ist, dass das Filmscharnier im mit einer Fahrzeugkarosserie verbauten Zustand des Innenverkleidungselements an einer Nichtsichtseite des Innenverkleidungselements angeordnet ist. Mit anderen Worten ist das Filmscharnier also derart an den Grundkörper angebunden, dass es im in mit einem Kraftfahrzeug bzw. einer Fahrzeugkarosserie verbauten Zustand des Innenverkleidungselements nicht sichtbar bzw. verdeckt ist.

Dabei kann es vorgesehen sein, dass der Ansatz im Vergleich zu dem freien Ende des Randabschnitts bezogen auf dessen querschnittlich betrachtete Längsausdehnung um ein gewisses Maß nach innen versetzt ist. Unter der Längenausdehnung des Randabschnitts ist die querschnittlich betrachtete Länge bzw. Längenerstreckung bzw. Höhe bzw. Höhenerstreckung des Randabschnitts zwischen dem Boden des Grundkörpers und dem randabschnittseitigen Ende zu verstehen. Der Ansatz kann sonach bezogen auf die querschnittlich betrachtete Längs(mittel)achse des Randabschnitts um ein gewisses Maß, d. h. insbesondere um ein im Hinblick auf eine konkrete konstruktive Umsetzung des erfindungsgemäßen Innenverkleidungselements festzulegendes Maß, axial nach innen, d. h. in Richtung des Bodens des Grundkörpers, versetzt angeordnet bzw. an dem Randabschnitt angebunden sein.

Es kann ferner vorgesehen sein, dass der Ansatz bezogen auf die querschnittlich betrachtete Breitenausdehnung des Randabschnitts um ein gewisses Maß von einer eine Außenseite des Grundkörpers bildenden Außenfläche nach innen versetzt ist. Unter der Breitenausdehnung des Randabschnitts ist die querschnittlich betrachtete Breite bzw. Breitenerstreckung des Randabschnitts zwischen einer eine dem Innenvolumen abgewandte Außenseite des Grundkörpers bildenden Außenfläche und einer eine dem Innenvolumen zugewandte Innenseite des Grundkörpers bildenden Innenfläche und somit typischerweise die Wandstärke des Randabschnitts zu verstehen. Der Ansatz kann sonach bezogen auf die querschnittlich betrachtete Längs(mittel)achse des Randabschnitts um ein gewisses Maß, d. h. insbesondere um ein im Hinblick auf eine konkrete konstruktive Umsetzung des erfindungsgemäßen Innenverkleidungselements festzulegendes Maß, radial nach innen, d. h. in Richtung des Innenvolumens des Grundkörpers, versetzt angeordnet bzw. an dem Randabschnitt angebunden sein. Wie erwähnt, kann der Ansatz zumindest abschnittsweise, insbesondere vollständig, in das Innenvolumen ragen.

Insbesondere in dem Fall, in dem der Ansatz bezogen auf die querschnittlich betrachtete Längenausdehnung des Randabschnitts um ein gewisses Maß nach innen versetzt ist und der Ansatz bezogen auf die querschnittlich betrachtete Breitenausdehnung des Randabschnitts um ein gewisses Maß von einer eine Außenseite des Grundkörpers bildenden Außenfläche nach innen versetzt angeordnet bzw. angebunden ist, ist zwischen dem freien Ende des Randabschnitts und dem Ansatz eine muldenartige Vertiefung gebildet.

Die versetzte Anordnung des Ansatzes ist in allen Fällen selbstverständlich derart, dass die Funktion des Filmscharniers, d. h. die über dieses realisierte schwenkbare Anbindung des Bügelelements, gewährleistet ist.

Insbesondere ist dabei gewährleistet, dass das Bügelelement, wie bevorzugt vorgesehen, zwischen einer ersten Schwenkstellung, in der es einen Zugang in das Innenvolumen freigibt, und einer zweiten Schwenkstellung, in der es einen Zugang in das Innenvolumen zumindest abschnittsweise verschließt oder verwehrt, verschwenkbar ist. Die erste Schwenkstellung kann als Offenstellung des Bügelelements, die zweite Schwenkstellung kann als Schließstellung des Bügelelements bezeichnet werden.

Eine zweckmäßige Ausführungsform des erfindungsgemäßen Innenverkleidungselements sieht vor, dass das Bügelelement im Bereich seines dem Filmscharnier abgewandten freien Endes mit einem Befestigungsabschnitt versehen ist, über welchen das Bügelelement, insbesondere in der vorstehend beschriebenen zweiten Schwenkstellung, lösbar an einem hierzu korrespondieren Befestigungsabschnitt des Grundkörpers befestigbar ist. Über die bügelelementseitigen und grundkörperseitigen Befestigungsabschnitte lässt sich das Bügelelement sonach mit seinem freien Ende lösbar an dem Grundkörper befestigen. Über den durch das Filmscharnier realisierten Befestigungspunkt ist eine unlösbare Befestigung des Bügelelements an dem Grundkörper gegeben, über den durch den Befestigungsabschnitt realisierten Befestigungspunkt, ist eine lösbare bzw. reversible Befestigung des Bügelelements an dem Grundkörper, d. h. einem hierzu korrespondierenden Befestigungsabschnitt, gegeben. Der grundkörperseitige Befestigungsabschnitt ist typischerweise an einem Randabschnitt des Grundkörpers vorgesehen, welcher dem Randabschnitt, an welchem das Filmscharnier über den Ansatz angeordnet bzw. angebunden ist, gegenüber liegt.

Bei dem bügelelementseitigen wie auch dem grundkörperseitigen Befestigungsabschnitt kann es sich jeweils um wenigstens ein Rast-Schnapp-Element handeln. Gleichermaßen können der bügelelementseitige und der grundkörperseitige Befestigungsabschnitt ein Rast-Schnapp-Element umfassen. Rast-Schnapp-Elemente sind deshalb vorteilhaft, da über diese auf eine konstruktiv vergleichsweise einfache Weise eine lösbare Befestigung eines ersten Bauteils an einem zweiten Bauteil realisierbar ist. Über die konkrete Ausführung der jeweiligen Rast-Schnapp-Elemente sind zudem gezielt unterschiedliche Befestigungs- bzw. Halte- und Lösekräfte vorsehbar.

Bei dem Grundkörper wie auch dem Bügelelement handelt es sich um Kunststoffbauteile, d. h. um aus Kunststoffmaterialien gebildete Bauteile. Der Grundkörper und/oder das Bügelelement und/oder das Filmscharnier und/oder der Ansatz sind sonach aus einem thermoplastischen Kunststoffmaterial, wie beispielsweise Acrylnitril-Butadien-Styrol (ABS), Polyamid (PA), Polycarbonat (PC), Polyethylen (PE), Polypropylen (PP), Polystyrol (PS), oder aus einer Mischung unterschiedlicher Kunststoffmaterialien, so genannter Blends, gebildet. Der Begriff Kunststoffmaterial schließt sonach auch Mischungen aus wenigstens zwei unterschiedlichen Kunststoffmaterialien, worunter auch Mischungen chemisch gleichartiger Kunststoffmaterialien mit unterschiedlichen Molmassen zu verstehen sind, ein. Die vorstehend genannte Aufzählung an Kunststoffmaterialien ist selbstverständlich lediglich exemplarischer Natur und keinesfalls abschließend.

Typischerweise sind alle genannten Bauteile bzw. Bauteilabschnitte des Innenverkleidungselements, d. h. das Innenverkleidungselement insgesamt, aus einem, gegebenenfalls demselben, Kunststoffmaterial gebildet. Dies vereinfacht die Herstellbarkeit des Innenverkleidungselements erheblich, da sämtliche diesem zugehörige Bauteile bzw. Bauteilabschnitte in einem Kunststoffspritzgießverfahren gemeinsam, d. h. gleichzeitig oder zeitlich gestaffelt, hergestellt werden können. Im Zusammenhang mit der Herstellung des Innenverkleidungselements sind sonach insbesondere Ein- oder Mehrkomponentenspritzgießverfahren denkbar. Erfindungsgemäß ist vorgesehen, dass der Grundkörper und das Bügelelement und das Filmscharnier und der Ansatz integral bzw. einstückig miteinander ausgebildet sind bzw. werden.

Eine weitere zweckmäßige Ausführungsform des erfindungsgemäßen Innenverkleidungselements sieht vor, dass das Innenvolumen des Grundkörpers als Aufnahmebereich für Funktionskomponenten eines mit dem Innenverkleidungselement ausgestatteten Kraftfahrzeugs dient. Mithin können in den Grundkörper bestimmte Funktionskomponenten, wie z. B. elektrische Leitungsverbindungen, eines Kraftfahrzeugs oder eines bestimmten kraftfahrzeugseitigen Bauteils, wie z. B. einer Heckklappe, integriert und somit im Hinblick auf den typischerweise knapp bemessenen Bauraum effizient untergebracht sein.

Der dem erfindungsgemäßen Innenverkleidungselement zugehörige Grundkörper ist querschnittlich betrachtet insbesondere u-förmig oder im Wesentlichen u-förmig ausgebildet. Der Grundkörper weist daher insbesondere eine trog- oder wannenförmige Gestalt auf.

Vorteilhaft ist das Innenverkleidungselement derart konstruiert, dass es, insbesondere im aufgeschwenkten Zustand des Bügelelements, d. h., wenn sich das Bügelelement in der weiter oben beschriebenen ersten Schwenkstellung befindet, keine Hinterschnitte aufweist. Das Innenverkleidungselement ist sonach in fertigungstechnischer Hinsicht ohne die Notwendigkeit komplexer Spritzgießwerkzeuggeometrien herstellbar. Insbesondere sind spritzgießwerkzeugseitig keine komplexen Auswerfer- und/oder Schieberelemente vorzusehen, da ein Anspritzen über die Bodenseite des herzustellenden Grundkörpers und ein Entformen des Innenverkleidungselements aus dem Spritzgießwerkzeug entgegen der Anspritzrichtung erfolgen kann.

Sämtliche im Zusammenhang mit dem Innenverkleidungselement stehenden Ausführungen gelten selbstverständlich auch für den Fall, in dem das erfindungsgemäße Innenverkleidungselement mehrere über jeweilige Filmscharniere an den Grundkörper angebundene Bügelelemente aufweist.

Bei dem erfindungsgemäßen Innenverkleidungselement handelt es sich um ein Heckklappenverkleidungsteil. Hierunter ist ein Bauteil zu verstehen, welches im Bereich einer kraftfahrzeugseitigen Heckklappe als Innenverkleidungselement und somit zur, insbesondere optischen, Abdeckung bzw. Verkleidung eines die Heckklappe mit der Fahrzeugkarosserie verbindenden Bauteils vorgesehen ist.

Weitere Merkmale, Vorteile und Einzelheiten der Erfindung ergeben sich aus den im Folgenden beschriebenen Ausführungsbeispielen sowie anhand der Zeichnungen. Dabei zeigt:
- Fig. 1, 2: je eine perspektivische Ansicht eines Innenverkleidungselements gemäß einem Ausführungsbeispiel der Erfindung,
- Fig. 3, 4: je eine Schnittansicht eines Innenverkleidungselements gemäß einem Ausführungsbeispiel der Erfindung, und
- Fig. 5: eine vergrößerte Darstellung der in Fig. 4 gezeigten Einzelheit V;
- Fig. 6: eine in einem Kraftfahrzeug verbaute Einbausituation eines Innenverkleidungselements gemäß einem Ausführungsbeispiel der Erfindung.

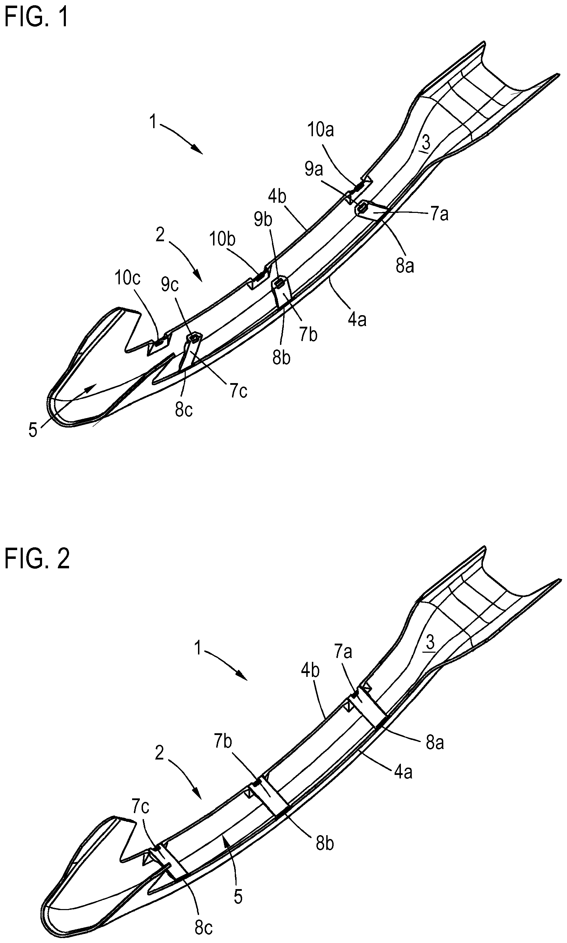

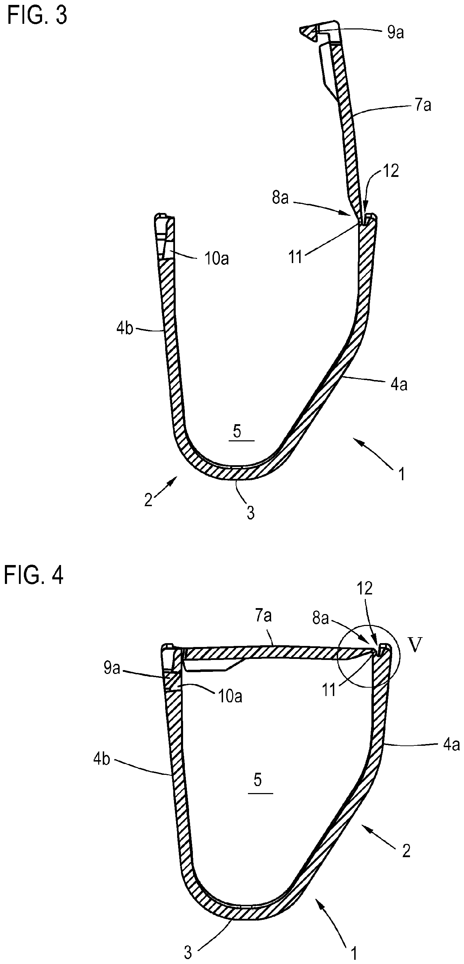

Die Fig. 1, 2 zeigen je eine perspektivische Ansicht eines Innenverkleidungselements 1 gemäß einem Ausführungsbeispiel der Erfindung. Die Fig. 3, 4 zeigen je eine Schnittansicht eines Innenverkleidungselements 1 gemäß einem Ausführungsbeispiel der Erfindung.

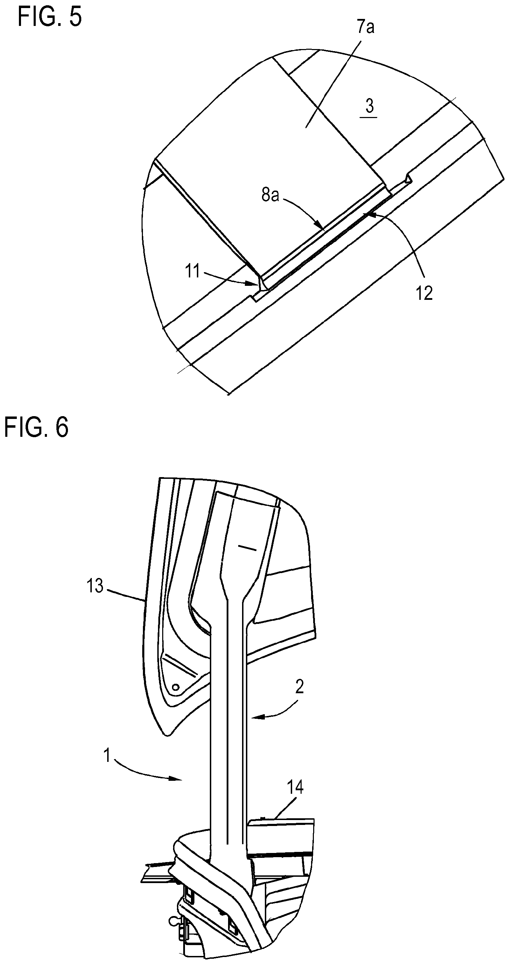

Bei dem in den Fig. gezeigten Innenverkleidungselement 1 handelt es sich um ein Heckklappenverkleidungsteil, mithin um ein Bauteil, welches im Bereich einer kraftfahrzeugseitigen Heckklappe 13 zur, insbesondere optischen, Abdeckung bzw. Verkleidung fahrzeugkarosserieseitiger bzw. heckklappenseitiger Abschnitte eines die Heckklappe 13 mit der Fahrzeugkarosserie 14 verbindenden Bauteils vorgesehen ist (vgl. Fig. 6).

Das Innenverkleidungselement 1 umfasst einen querschnittlich betrachtet im Wesentlichen u-förmig und sonach wannenförmig ausgebildeten Grundkörper 2. Der Grundkörper 2 begrenzt sonach durch einen Bodenabschnitt 3 und zwei von diesem randseitig (recht)winklig abgehende bzw. abragende Randabschnitte 4a, 4b ein Innenvolumen 5, welches beispielsweise der Aufnahme bzw. Integration von kraftfahrzeugseitigen Funktionskomponenten, wie z. B. elektrischen Leitungen, dient. Der Grundkörper 2 ist bezogen auf dessen Längs(mittel)achse endseitig mit einer Fahrzeugkarosserie verbindbar bzw. zu verbinden (vgl. Fig. 6).

An einem bezogen auf die Längserstreckung des Grundkörpers 2 mittleren Bereich des in den Fig. 1 - 4 rechten Randabschnitts 4a sind Bügelelemente 7a, 7b, 7c mittels jeweiliger Filmscharniere 8a, 8b, 8c schwenkbar angebunden. Die Bügelelemente 7a, 7b, 7c sind in den Fig. 1, 3 in einer ersten Schwenkstellung (Offenstellung), in der sie einen Zugang in das Innenvolumen 5 vollständig freigeben, und einer in den Fig. 2, 4 gezeigten zweiten Schwenkstellung (Schließstellung), in der sie einen Zugang in das Innenvolumen 5 zumindest abschnittsweise verwehren, verschwenkbar.

In der in den Fig. 2, 4 gezeigten Schwenkstellung sind die Bügelelemente 7a, 7b, 7c jeweils lösbar an dem dem Randabschnitt 4a gegenüber liegenden Randabschnitt 4b befestigt. Die Befestigung ergibt sich durch das Zusammenwirken bügelelementseitiger Befestigungsabschnitte 9a, 9b, 9c und hierzu korrespondierender randabschnittseitiger Befestigungsabschnitte 10a, 10b, 10c. Bei den bügelelementseitigen Befestigungsabschnitten 9a, 9b, 9c bzw. den randabschnittseitigen Befestigungsabschnitten 10a, 10b, 10c handelt es sich jeweils um Rast-Schnapp-Elemente, d. h. die bügelelementseitigen Befestigungsabschnitte 9a, 9b, 9c können in die randabschnittseitigen Befestigungsabschnitte 10a, 10b, 10c reversibel einrasten bzw. einschnappen.

Wie sich insbesondere aus den Fig. 3, 4, 5 ergibt, sind die Filmscharniere 8a, 8b, 8c, über welche die Bügelelemente 7a, 7b, 7c jeweils an dem Randabschnitt 4a des Grundkörpers 2 angebunden sind, grundkörperseitig an einem Ansatz 11 angebunden. Der Ansatz 11 ist ebenso an dem Randabschnitt 4a angebunden. Ersichtlich ist der Ansatz 11 jedoch nicht im Bereich des freien Endes des Randabschnitts 4a, sondern versetzt zu dem freien Ende des Randabschnitts 4a angebunden bzw. angeordnet.

Die relativ zu dem freien Ende des Randabschnitts 4a versetzte Anordnung des Ansatzes 11 stellt eine Möglichkeit dar, den bei Schwenkbewegung der Filmscharniere 8a, 8b, 8c mit der Zeit materialbedingt auftretenden "Weißbruch" zu kaschieren.

Wie insbesondere anhand der Fig. 3, 4 ersichtlich ist, ist der Ansatz 11 im Vergleich zu dem freien Ende des Randabschnitts 4a bezogen auf dessen (querschnittlich betrachtete) Längsausdehnung um ein gewisses Maß nach innen versetzt. Unter der Längenausdehnung des Randabschnitts 4a ist die Länge bzw. Längenerstreckung bzw. Höhe bzw. Höhenerstreckung des Randabschnitts 4a zwischen dem Bodenabschnitt 3 des Grundkörpers 2 und dem randabschnittseitigen Ende zu verstehen. Der Ansatz 11 ist bezogen auf die querschnittlich betrachtete Längs(mittel)achse des Randabschnitts 4a sonach um ein gewisses Maß axial nach innen, d. h. in Richtung des Bodenabschnitts 3 des Grundkörpers 2 versetzt angeordnet bzw. an dem Randabschnitt 4a angebunden.

Gleichermaßen ist der Ansatz 11 bezogen auf die (querschnittlich betrachtete) Breitenausdehnung des Randabschnitts 4a um ein gewisses Maß von einer eine Außenseite des Randabschnitts 4a bzw. des Grundkörpers 2 bildenden Außenfläche nach innen versetzt. Unter der Breitenausdehnung des Randabschnitts 4a ist die querschnittlich betrachtete Breite bzw. Breitenerstreckung des Randabschnitts 4a zwischen einer die dem Innenvolumen 5 abgewandte Außenseite des Randabschnitts 4a bzw. Grundkörpers 2 bildenden Außenfläche und einer die dem Innenvolumen 5 zugewandte Innenseite des Randabschnitts 4a bzw. Grundkörpers 2 bildenden Innenfläche und somit typischerweise die Wandstärke des Randabschnitts 4a zu verstehen. Der Ansatz 11 ist bezogen auf die querschnittlich betrachtete Längs(mittel)achse des Randabschnitts 4a um ein gewisses Maß radial nach innen, d. h. in Richtung des Innenvolumens 5 des Grundkörpers 2 versetzt angeordnet bzw. an dem Randabschnitt 4a angebunden. Der Ansatz 11 ragt sonach in das Innenvolumen 5 des Grundkörpers 2.

Hieraus ergibt sich, dass zwischen dem freien Ende des Randabschnitts 4a und dem Ansatz 11 eine muldenartige Vertiefung 12 gebildet ist (vgl. insbesondere Fig. 5).

Das Innenverkleidungselement 1 ist ein Kunststoffspritzgießbauteil und sonach aus einem spritzgießfähigen thermoplastischen Kunststoffmaterial, wie z. B. Polypropylen (PP), gebildet. Sämtliche das Innenverkleidungselement 1 zugehörigen Komponenten, d. h. der Grundkörper 2, die Bügelelemente 7a, 7b, 7c, die Filmscharniere 8a, 8b, 8c und der Ansatz 11 sind integral, d. h. einstückig, ausgeführt. Das Innenverkleidungselement 1 lässt sich daher in fertigungstechnischer Hinsicht bevorzugt in einem gemeinsamen Spritzgießverfahren herstellen.

Wie sich anhand von Fig. 3 erkennen lässt, ist das Innenverkleidungselement 1 derart konstruiert, dass es im aufgeschwenkten Zustand der Bügelelemente 7a, 7b, 7c keine Hinterschnitte aufweist. Das Innenverkleidungselement 1 ist sonach in fertigungstechnischer Hinsicht ohne die Notwendigkeit komplexer Spritzgießwerkzeuggeometrien herstellbar. Insbesondere sind spritzgießwerkzeugseitig keine komplexen Auswerfer- und/oder Schieberelemente vorzusehen, da ein Anspritzen über den Bodenabschnitt 3 des Grundkörpers 2 des herzustellenden Innenverkleidungselements 1 und ein Entformen entgegen der Anspritzrichtung erfolgen kann.

Fig. 6 zeigt eine beispielhafte, in einem Kraftfahrzeug verbaute Einbausituation eines Innenverkleidungselements 1 gemäß einem Ausführungsbeispiel der Erfindung. Wie erwähnt, handelt es sich bei dem Innenverkleidungselement 1 um ein Heckklappenverkleidungselement. Konkret zeigt Fig. 6 eine Verbausituation des Innenverkleidungselements 1 im Bereich einer kraftfahrzeugseitigen Heckklappe 13. Das Innenverkleidungselement 1 umgibt einen die Heckklappe 13 mit der Fahrzeugkarosserie 14 verbindenden, schwenkbar gelagerten Träger. Der Träger ist dabei zumindest abschnittsweise in dem grundkörperseitigen Innenvolumen 5 aufgenommen. Ersichtlich sind die Filmscharniere 8a, 8b, 8c, über welche die Bügelelemente 7a, 7b, 7c grundkörperseitig angebunden sind, verdeckt und sonach gegebenenfalls filmscharnierseitig ausgebildete Weißbrüche nicht sichtbar.

## Patentansprüche

1. Innenverkleidungselement (1) für ein Kraftfahrzeug, welches ein zur Abdeckung oder Verkleidung eines eine Heckklappe mit einer Fahrzeugkarosserie verbindenden Bauteils eingerichtetes Heckklappenverkleidungsteil ist, wobei das Innenverkleidungselement (1) einen ein Innenvolumen (5) begrenzenden, insbesondere wannenförmigen, Grundkörper (2) und wenigstens ein Bügelelement (7a, 7b, 7c) umfasst, wobei das wenigstens eine Bügelelement (7a, 7b, 7c) über wenigstens ein Filmscharnier (8a, 8b, 8c) schwenkbar an dem Grundkörper (2) angelenkt ist, wobei das Filmscharnier (8a, 8b, 8c) grundkörperseitig an einem an einem das Innenvolumen (5) abschnittweise begrenzenden Randabschnitt (4a) des Grundkörpers (2) gebildeten Ansatz (11) ausgebildet ist, wobei der Ansatz (11) versetzt zu dem freien Ende des Randabschnitts (4a) angeordnet ist, wobei zwischen dem freien Ende des Randabschnitts (4a) und dem Ansatz (11) eine muldenartige Vertiefung (12) gebildet ist, wobei
der Grundkörper (2) und das wenigstens eine Bügelelement (7a, 7b, 7c) und das wenigstens eine Filmscharnier (8a, 8b, 8c) und der Ansatz (11) aus einem thermoplastischen Kunststoffmaterial integral miteinander ausgebildet sind.

2. Innenverkleidungselement nach Anspruch 1, **dadurch gekennzeichnet, dass** der Ansatz (11) im Vergleich zu dem freien Ende des Randabschnitts (4a) bezogen auf dessen querschnittlich betrachtete Längsausdehnung um ein gewisses Maß nach innen versetzt ist.

3. Innenverkleidungselement nach Anspruch 1 oder 2, **dadurch gekennzeichnet, dass** der Ansatz (11) bezogen auf die querschnittlich betrachtete Breitenausdehnung des Randabschnitts (4a) um ein gewisses Maß von einer eine Außenseite des Grundkörpers (2) bildenden Außenfläche nach innen versetzt ist.

4. Innenverkleidungselement nach einem der vorangehenden Ansprüche, **dadurch gekennzeichnet, dass** der Ansatz (11) derart versetzt zu dem freien Ende des Randabschnitts (4a) angeordnet ist, dass das Filmscharnier (8a, 8b, 8c) im mit einer Fahrzeugkarosserie verbauten Zustand des Innenverkleidungselements (1) an einer Nichtsichtseite des Innenverkleidungselements (1) angeordnet ist.

5. Innenverkleidungselement nach einem der vorangehenden Ansprüche, **dadurch gekennzeichnet, dass** das wenigstens eine Bügelelement (7a, 7b,7c) zwischen einer ersten Schwenkstellung, in der es einen Zugang in das Innenvolumen (5) freigibt, und einer zweiten Schwenkstellung, in der es einen Zugang in das Innenvolumen (5) zumindest abschnittsweise verwehrt, verschwenkbar ist.

6. Innenverkleidungselement nach einem der vorangehenden Ansprüche, **dadurch gekennzeichnet, dass** das wenigstens eine Bügelelement (7a, 7b,7c) im Bereich seines einem Filmscharnier (8a, 8b, 8c) abgewandten freien Endes mit einem Befestigungsabschnitt (9a, 9b, 9c) versehen ist, über welchen das Bügelelement (8a, 8b, 8c) lösbar an einem hierzu korrespondieren Befestigungsabschnitt (10a, 10b, 10c) des Grundkörpers (2) befestigbar ist.

7. Innenverkleidungselement nach Anspruch 6, **dadurch gekennzeichnet, dass** der bügelelementseitige und das grundkörperseitige Befestigungsabschnitt (9, 10) ein Rast-Schnapp-Element ist oder der bügelelementseitige und der grundkörperseitige Befestigungsabschnitt (9, 10) ein Rast-Schnapp-Element umfasst.

8. Innenverkleidungselement nach einem der vorangehenden Ansprüche, **dadurch gekennzeichnet, dass** der Grundkörper (2) und/oder das wenigstens eine Bügelelement (7a, 7b, 7c) und/oder das wenigstens eine Filmscharnier (8a, 8b, 8c) und/oder der Ansatz (11) aus Acrylnitril-Butadien-Styrol, Polyamid, Polycarbonat, Polyethylen, Polypropylen, oder Polystyrol gebildet ist.

9. Innenverkleidungselement nach einem der vorangehenden Ansprüche, **dadurch gekennzeichnet, dass** das Innenvolumen (5) des Grundkörpers (2) als Aufnahmebereich für Funktionskomponenten eines mit dem Innenverkleidungselement (1) ausgestatteten Kraftfahrzeugs dient.

10. Innenverkleidungselement nach einem der vorangehenden Ansprüche, **dadurch gekennzeichnet, dass** der Grundkörper (2) querschnittlich betrachtet u-förmig ausgebildet ist.

## Claims

1. Interior trim element (1) for a motor vehicle, which is a boot lid trim part adapted to cover or clad a component connecting a boot lid to a vehicle body, wherein the interior trim element (1) comprises an in particular trough-shaped base body (2), which delimits an inner volume (5), and at least one clip element (7a, 7b, 7c), wherein the at least one clip element (7a, 7b, 7c) is hinged via at least one film hinge (8a, 8b, 8c) pivotably on the base body (2), wherein the film hinge (8a, 8b, 8c) is formed on the base body side on a lip (11) formed on an edge section (4a) of the base body (2) delimiting the inner volume (5), at least in sections, wherein the lip (11) is arranged offset to the free end of the edge section (4a), wherein a trough-shaped depression (12) is formed between the free end of the edge section (4a) and the lip (11), wherein the base body (2) and the at least one clip element (7a, 7b, 7c) and the at least one film hinge (8a, 8b, 8c) and the lip (11) are formed integrally with one another from a thermoplastic plastic material.

2. Interior trim element according to claim 1, **characterized in that** the lip (11) is offset inwards by a certain extent in comparison with the free end of the edge section (4a) relative to its longitudinal extension when viewed in cross section.

3. Interior trim element according to claim 1 or 2, **characterized in that** the lip (11) is offset inwards by a certain extent from an outer surface forming an outer side of the base body (2) relative to the width extension of the edge section (4a) when viewed in cross section.

4. Interior trim element according to any one of the preceding claims, **characterized in that** the lip (11) is arranged offset to the free end of the edge section (4a) in such a way that the film hinge (8a, 8b, 8c) is arranged on a non-finish side of the interior trim element (1) in the integrated state of the interior trim element (1) with a vehicle body.

5. Interior trim element according to any one of the preceding claims, **characterized in that** the at least one clip element (7a, 7b, 7c) is pivotable between a first pivot position, in which it releases an access to the inner volume (5), and a second pivot position, in which it blocks an access to the inner volume (5), at least in sections.

6. Interior trim element according to any one of the preceding claims, **characterized in that** the at least one clip element (7a, 7b, 7c) is provided in the area of its free end facing away from a film hinge (8a, 8b, 8c) with a fastening portion (9a, 9b, 9c), via which the clip element (7a, 7b, 7c) can be fastened detachably to a fastening portion (10a, 10b, 10c) of the base body (2) corresponding to this.

7. Interior trim element according to claim 6, **characterized in that** the fastening portion (9, 10) on the clip element side and on the base body side is a latch-snap element or the fastening portion (9, 10) on the clip element side and on the base body side comprises a latch-snap element.

8. Interior trim element according to any one of the preceding claims, **characterized in that** the base body (2) and/or the at least one clip element (7a, 7b, 7c) and/or the at least one film hinge (8a, 8b, 8c) and/or the lip (11) is formed from acrylonitrile-butadiene-styrene, polyamide, polycarbonate, polyethylene, polypropylene, or polystyrene.

9. Interior trim element according to any one of the preceding claims, **characterized in that** the inner volume (5) of the base body (2) serves as a receiving area for functional components of a motor vehicle equipped with the interior trim element (1).

10. Interior trim element according to any one of the preceding claims, **characterized in that** the base body (2) is formed U-shaped when viewed in cross section.

## Revendications

1. Elément de garniture intérieure (1) pour un véhicule automobile, lequel est une partie de garniture de hayon configuré pour recouvrir ou habiller un composant reliant un hayon à une carrosserie de véhicule, dans lequel l'élément de garniture intérieure (1) comprend un corps de base (2) délimitant un volume intérieur (5), en particulier en forme de cuve, et au moins un élément formant arceau (7a, 7b, 7c), dans lequel l'au moins un élément formant arceau (7a, 7b, 7c) est articulé au niveau du corps de base (2) de manière à pouvoir pivoter par l'intermédiaire d'au moins une charnière à film (8a, 8b, 8c), dans lequel la charnière à film (8a, 8b, 8c) est réalisée côté corps de base au niveau d'un épaulement (11) formé au niveau d'une section de bord (4a), délimitant par endroits le volume intérieur (5), du corps de base (2), dans lequel l'épaulement (11) est disposé de manière décalée par rapport à l'extrémité libre de la section de bord (4a), dans lequel un renfoncement (12) de type cavité est formé entre l'extrémité libre de la section de bord (4a) et l'épaulement (11), dans lequel
le corps de base (2) et l'au moins un élément formant arceau (7a, 7b, 7c) et l'au moins une charnière à film (8a, 8b, 8c) et l'épaulement (11) sont réalisés intégralement les uns avec les autres à partir d'un matériau synthétique thermoplastique.

2. Elément de garniture intérieure selon la revendication 1, **caractérisé en ce que** l'épaulement (11) est décalé vers l'intérieur d'une certaine mesure en comparaison avec l'extrémité libre de la section de bord (4a) par rapport à son extension longitudinale vue dans la section transversale.

3. Elément de garniture intérieure selon la revendication 1 ou 2, **caractérisé en ce que** l'épaulement (11) est décalé vers l'intérieur d'une certaine mesure d'une surface extérieure formant un côté extérieur du corps de base (2) par rapport à l'extension en largeur, vue dans la section transversale, de la section de bord (4a).

4. Elément de garniture intérieure selon l'une quelconque des revendications précédentes, **caractérisé en ce que** l'épaulement (11) est disposé de manière décalée par rapport à l'extrémité libre de la section de bord (4a) de telle manière que la charnière à film (8a, 8b, 8c) est disposée, dans l'état assemblé à une carrosserie de véhicule, de l'élément de garniture intérieur (1), au niveau d'un côté non visible de l'élément de garniture intérieur (1).

5. Elément de garniture intérieure selon l'une quelconque des revendications précédentes, **caractérisé en ce que** l'au moins un élément formant arceau (7a, 7b, 7c) peut être pivoté entre une première position de pivotement, dans laquelle il dégage un accès dans le volume intérieur (5), et une deuxième position de pivotement, dans laquelle il interdit au moins par endroits un accès dans le volume intérieur (5).

6. Elément de garniture intérieure selon l'une quelconque des revendications précédentes, **caractérisé en ce que** l'au moins un élément formant arceau (7a, 7b, 7c) est pourvu, dans la zone de son extrémité libre opposée à une charnière à film (8a, 8b, 8c), d'une section de fixation (9a, 9b , 9c), par l'intermédiaire de laquelle l'élément formant arceau (8a, 8b, 8c) peut être fixé de manière amovible au niveau d'une section de fixation (10a, 10b, 10c) correspondant à cet effet du corps de base (2).

7. Elément de garniture intérieure selon la revendication 6, **caractérisé en ce que** la section de fixation (9, 10) côté élément formant arceau et côté corps de base est un élément d'enclenchement à déclic ou la section de fixation (9, 10) côté élément formant arceau et côté corps de base comprend un élément d'enclenchement à déclic.

8. Elément de garniture intérieure selon l'une quelconque des revendications précédentes, **caractérisé en ce que** le corps de base (2) et/ou l'au moins un élément formant arceau (7a, 7b, 7c) et/ou l'au moins une charnière à film (8a, 8b, 8c) et/ou l'épaulement (11) sont formés à partir d'acrylonitrile butadiène styrène, de polyamide, de polycarbonate, de polyéthylène, de polypropylène ou de polystyrène.

9. Elément de garniture intérieure selon l'une quelconque des revendications précédentes, **caractérisé en ce que** le volume intérieur (5) du corps de base (2) fait office de zone de logement pour des composants fonctionnels d'un véhicule automobile équipé de l'élément de garniture intérieur (1).

10. Elément de garniture intérieure selon l'une quelconque des revendications précédentes, **caractérisé en ce que** le corps de base (2) est réalisé de manière à présenter une forme de U dans la section transversale.
